# EUROPEAN PATENT SPECIFICATION

(11) **EP 4 575 294 B1**
(45) Date of publication and mention of the grant of the patent: **18.02.2026**
(21) Application number: 24215670.1
(22) Date of filing: 27.11.2024
(51) Int. Cl.: F16L 27/08, F16L 51/04

(54) **EARTHQUAKE-RESISTANT EXPANSION JOINT FOR DUCTS**
ERDBEBENFESTES EXPANSIONSTEIL FÜR ROHRLEITUNGEN
TRONÇON DE DILATATION ANTISISMIQUE POUR CONDUITES

(30) Priority: 18.12.2023 IT 202300027048
(43) Date of publication of application: 25.06.2025
(73) Proprietor: Prosystem Group Srl, 30030 Pianiga (VE) (IT)
(72) Inventor: CHIOCCHETTI, Fabio, 30030 PIANIGA (IT)
(74) Representative: Rocchetto, Elena

(56) References cited:
- EP-A1- 4 148 314
- CN-A- 102 182 896
- JP-B2- 4 477 984

## Description

The present invention concerns expansion joints for ducts and in particular it concerns a new earthquake-resistant expansion joint for ducts.

Hydraulic systems, more specifically water systems, usually comprise expansion vessels intended to prevent the so-called water hammer following a sudden shutdown of the demand of circulating fluid, and partly also to maintain a constant pressure in the system in case of temperature changes.

Main pipelines, which serve several buildings, are made of a rigid material, usually stainless steel.

In case of ground settlement, building settlement or earthquakes, these pipelines are subject to movements and displacements along one or more axes as well as to rotary movements.

To compensate for said movements and displacements, earthquake-resistant expansion joints for ducts are used, at regular intervals or at the buildings.

Said joints are designed to absorb sudden loads resulting from earthquakes in seismic areas, and to eliminate stress on the line, thus allowing the systems to move in six different directions integrally with the structures and ensuring their continuous and uninterrupted operation.

Earthquake-resistant expansion joints are made up of several pipe sections assembled together to form a generically U- or V-shaped unit, in which each of the two ends of said U or V shape comprises a section of rigid curved pipe suited to be connected to one of the two generically coaxial pipe sections, while the two parallel sections of said U shape, or the diverging sections of the V shape, are flexible.

The vertex portion of the U shape or V shape consists of a rigid curved pipe section.

All of said pipe sections, rigid or flexible, are actually joined together in such a way that they cannot be separated, that is, by welding or *screwing.*

The document EP 4 148 314 A1 discloses an example of such an expansion joint. earthquake-resistant expansion joints used at present have several drawbacks.

Joining the different pipe sections by welding requires time, skilled labour and specific equipment.

Joining the different pipe sections by screwing them together requires time and the use of sealing gaskets on the threads, and does not guarantee tightness over time and under stress conditions.

If maintenance on any part of the joints is needed, they must be completely disconnected from the system in which they are installed.

If joints with the same diameter but capable of absorbing movement to a greater or lesser extent are needed, meaning with parallel sections of said U shape or diverging sections of the V shape, all parts must be j oined during production and the resulting product is a single object and cannot be modified.

In order to overcome all the drawbacks mentioned above, a new type of earthquake-resistant expansion joint has been designed and manufactured.

One object of the invention is to provide a new joint whose production time is reduced.

Another object of the invention is to provide a new joint whose production costs are reduced.

Another object of the invention is to reduce the production costs of j oints having the same diameter and flow rate but capable of absorbing movement to a greater or lesser extent.

Another object of the present invention is to improve the storage conditions of the joints for which there is less demand and to reduce the space they occupy in the warehouse.

These and other direct and complementary objects are achieved by the new earthquake-resistant expansion joint comprising two flexible pipes, one rigid pipe, four angled or curved pipe fittings, and six grooved rigid joints.

The flexible pipes, the rigid pipe and the angled or curved pipe fittings all have their ends shaped with an annular projection that is concentric with the end itself. Said annular projections at the end of the flexible pipes, of the rigid pipe and of the angled or curved pipe fittings are suitable for connection with a grooved rigid joint.

The flexible pipes, the rigid pipe and the angled or curved pipe fittings listed above are arranged in the following sequence: angled or curved pipe fitting, flexible pipe, angled or curved pipe fitting, rigid pipe, angled or curved pipe fitting, flexible pipe, angled or curved pipe fitting so as to form a U shape or a V shape.

Each end of each pipe is joined and connected to the end of the adjacent angled or curved pipe fitting by means of a grooved rigid joint.

Each grooved rigid joint comprises two semicircular segments that can be coupled together by means of screws and nuts so as to form a complete circle. The concave part of each semicircular segment of a grooved rigid joint is provided with two parallel grooves suited to accommodate and retain said annular projections of the ends of the pipes and of the angled or curved pipe fittings. The characteristics of the new earthquake- resistant expansion joint are better clarified in the following description, making reference to the drawings, which are attached by way of non-limiting example.

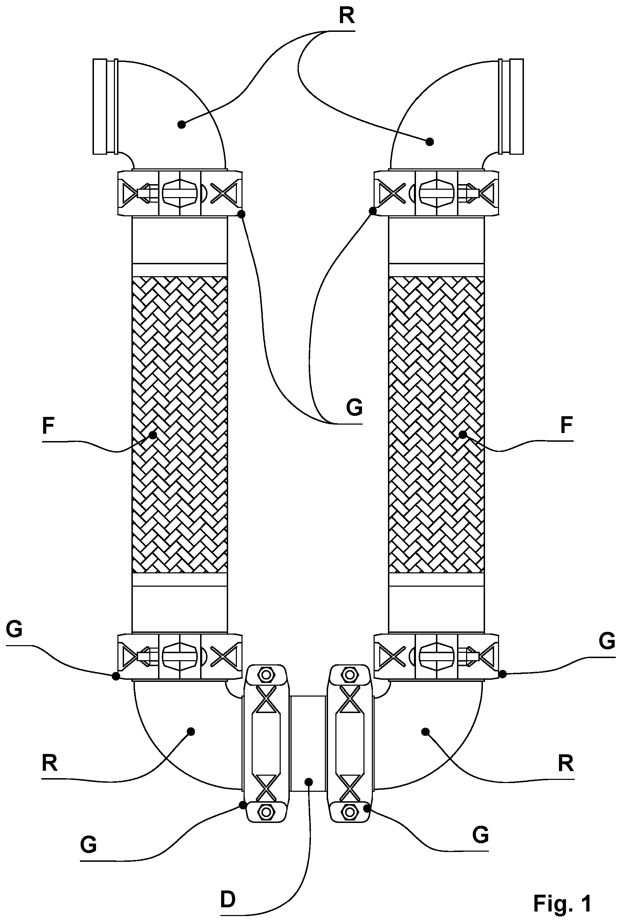

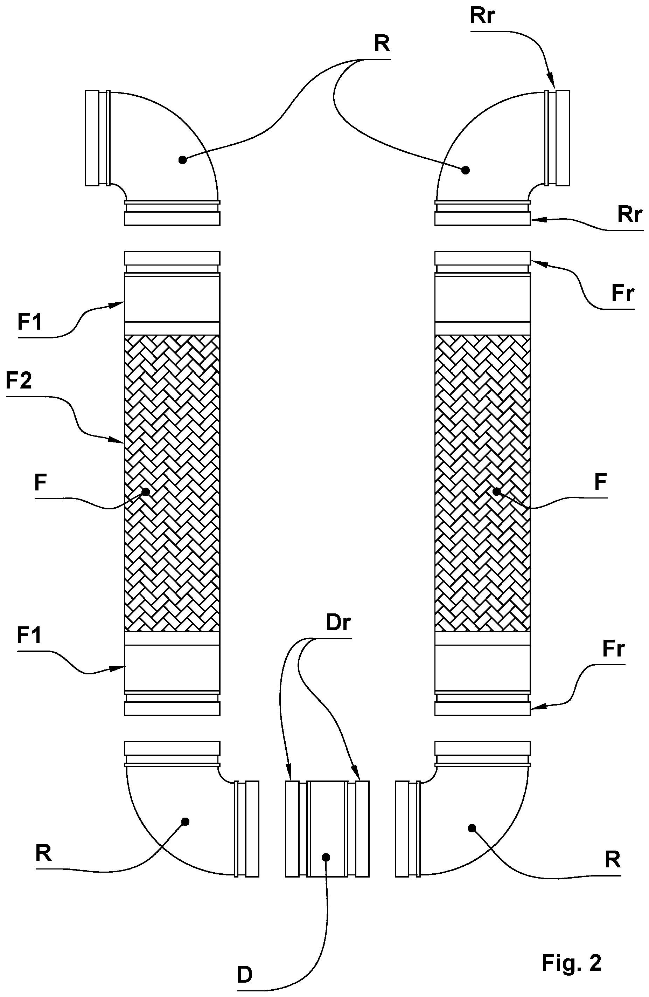

Figure 1 shows the new earthquake-resistant expansion joint when assembled, while Figure 2 shows the various parts separated but near one another, except for the grooved rigid joints (G).

The new earthquake-resistant expansion joint comprises two flexible pipes (F), one rigid pipe (D), four angled (R) or curved pipe fittings, six grooved rigid joints (G).

Each flexible pipe (F) comprises, in turn, two rigid connection sections (F1) joined by a flexible section (F2). The free ends of said two connection sections (F1) are externally provided with an annular projection (Fr) that is concentric with the end itself.

Said rigid pipe (D) consists of a section of non-flexible pipe. The ends of said rigid pipe (D) are externally provided with an annular projection (Dr) that is concentric with the end itself.

Said angled (R) or curved pipe fittings consist of portions whose connection ends are angled with respect to each other. The ends of each angled (R) or curved pipe fitting are externally provided with an annular projection (Rr) that is concentric with the end itself.

The flexible pipes (F), the rigid pipe (D) and the angled (R) or curved pipe fittings are arranged as shown in Figure 2.

The ends of the various pipes (F, D) and of the angled pipe fittings (R) are brought near each other, and a grooved rigid joint (G) is applied to each pair of adjacent ends in such a way as to obtain the assembly shown in Figure 1.

The example shows angled (R) or curved pipe fittings whose two ends are arranged at 90° with respect to each other. Consequently, the new earthquake-resistant expansion joint assumes the generic shape of a U.

Said joint is capable of absorbing expansion both in the direction of the plane defined by said pipes and in the direction of the plane orthogonal to it.

An equivalent solution is represented by the use of angled (R) or curved pipe fittings whose two ends are arranged at 120° with respect to each other, so that the new earthquake-resistant expansion joint assumes the generic shape of a V. The new earthquake-resistant expansion joint made up as described above offers considerable advantages.

The production of each expansion joint takes a short time.

The production of each expansion joint does not require the use of special tools or equipment.

The production of each expansion joint requires the simple mechanical connection of parts.

The production of expansion joints having the same diameter and flow rate but capable of absorbing different movements requires the simple assembly of the same parts with flexible pipes (F) of different lengths.

It is possible to replace just one part of the new expansion joint instead of replacing the entire expansion joint.

The new expansion joint allows inspection and maintenance of each of its individual sections.

These are the schematic outlines that are sufficient for the expert in the art to carry out the invention, consequently, on practical application variants may be obtained.

Therefore, with reference to the above description and the attached drawings, the following claims are made.

## Claims

1. Earthquake-resistant expansion joint for ducts, comprising two flexible pipes (F), one rigid pipe (D), and four angled (R) or curved pipe fittings, *wherein* said flexible pipes (F), said rigid pipe (D), and said angled (R) or curved pipe fittings are arranged according to the following sequence: angled (R) or curved pipe fitting, flexible pipe (F), angled (R) or curved pipe fitting, rigid pipe (D), angled (R) or curved fitting, flexible pipe (F), angled (R) or curved fitting according to a generically U-shaped or V-shaped arrangement, **characterized in that** the earthquake-resistant expansion joint further comprises six grooved rigid joints (G), wherein said flexible pipes, said rigid pipe and said angled or curved pipe fittings have their ends shaped with an annular projection (Fr, Dr, Rr) that is concentric with the end itself, and wherein the end of each pipe (F, D) is joined and connected to the end of the adjacent angled (R) or curved pipe fitting by means of a grooved rigid joint (G).

2. Earthquake-resistant expansion joint according to claim 1, **characterized in that** said angled (R) or curved pipe fittings are at right angles, with the two ends arranged at 90° with respect to each other.

3. Earthquake-resistant expansion joint according to claim 1, **characterized in that** each of said angled (R) or curved pipe fittings has its two ends arranged at 120° with respect to each other.

## Patentansprüche

1. Erdbebensichere Dehnungsfuge für Kanäle, umfassend zwei flexible Rohre (F), ein starres Rohr (D) und vier Winkel- (R) oder Bogenrohrverbindungsstücke,
*wobei* die besagten flexiblen Rohre (F), das besagte starre Rohr (D) und die besagten Winkel- (R) oder Bogenrohrverbindungsstücke gemäß der folgenden Reihenfolge angeordnet sind: Winkel- (R) oder Bogenrohrverbindungsstück, flexibles Rohr (F), Winkel- (R) oder Bogenrohrverbindungsstück, starres Rohr (D), Winkel- (R) oder Bogenrohrverbindungsstück, flexibles Rohr (F), Winkel- (R) oder Bogenrohrverbindungsstück gemäß einer allgemein U-förmigen oder V-förmigen Anordnung, **dadurch gekennzeichnet, dass** die erdbebensichere Dehnungsfuge ferner sechs gerillte starre Verbindungen (G) umfasst, wobei die besagten flexiblen Rohre, das besagte starre Rohr und die besagten Winkel- oder Bogenrohrverbindungsstücke an ihren Enden mit einem ringförmigen Vorsprung (Fr, Dr, Rr) geformt sind, der konzentrisch mit dem Ende selbst ist, und wobei das Ende jedes Rohrs (F, D) mit dem Ende des benachbarten Winkel- (R) oder Bogenrohrverbindungsstücks mittels einer gerillten starren Verbindung (G) verbunden und zusammengeschlossen ist.

2. Erdbebensichere Dehnungsfuge nach Patentanspruch 1, **dadurch gekennzeichnet, dass** die besagten Winkel- (R) oder Bogenrohrverbindungsstücke rechtwinklig sind, wobei die beiden Enden in einem Winkel von 90° zueinander angeordnet sind.

3. Erdbebensichere Dehnungsfuge nach Patentanspruch 1, **dadurch gekennzeichnet, dass** die beiden Enden jedes der besagten Winkel- (R) oder Bogenrohrverbindungsstücke in einem Winkel von 120° zueinander angeordnet sind.

## Revendications

1. Joint de dilatation antisismique pour conduits, comprenant deux tuyaux flexibles (F), un tuyau rigide (D) et quatre raccords angulaires (R) ou courbes,
*où* lesdits tuyaux flexibles (F), ledit tuyau rigide (D) et lesdits raccords angulaires (R) ou courbes sont disposés dans l'ordre suivant : raccord angulaire (R) ou courbe, tuyau flexible (F), raccord angulaire (R) ou courbe, tuyau rigide (D), raccord angulaire (R) ou courbe, tuyau flexible (F), raccord angulaire (R) ou courbe selon une disposition générique en forme de U ou de V, **caractérisé en ce que** le joint de dilatation antisismique comprend en outre six joints rigides rainurés (G), où lesdits tuyaux flexibles, ledit tuyau rigide et lesdits raccords angulaires ou courbes ont leurs extrémités galbées avec une projection annulaire (Fr, Dr, Rr) qui est concentrique avec l'extrémité elle-même, et où l'extrémité de chaque tuyau (F, D) est jointe et connectée à l'extrémité du raccord angulaire (R) ou courbe adjacent au moyen d'un joint rigide rainuré (G).

2. Joint de dilatation antisismique selon la revendication 1, **caractérisé en ce que** lesdits raccords angulaires (R) ou courbes sont à angle droit, les deux extrémités étant disposées à 90° l'une par rapport à l'autre.

3. Joint de dilatation antisismique selon la revendication 1, **caractérisé en ce que** chacun desdits raccords angulaires (R) ou courbes présente ses deux extrémités disposées à 120° l'une par rapport à l'autre.
